# EUROPEAN PATENT APPLICATION

(11) **EP 3 018 395 A1**
(43) Date of publication of application: **11.05.2016**
(21) Application number: 14819937.5
(22) Date of filing: 03.07.2014
(51) Int. Cl.: F16L 33/01, F16L 39/02

(54) **CONNECTOR FOR FLEXIBLE DUCT**

(30) Priority: 04.07.2013 BR 102013017228
(71) Applicant: Símeros Projetos Eletromecânicos Ltda., 91530-290 Porto Alegre - RS (BR)
(72) Inventor: BERTONI, Fabiano, 90620-010 Porto Alegre - RS (BR); SEBASTIAN LÓPEZ, Facundo, 90010-313 Porto Alegre - RS (BR)
(74) Representative: Nuss, Laurent
(86) International application number: PCT/BR2014/000221
(87) International publication number: WO 2015/000049

(57) **Abstract**

The present invention proposes a connector (10) for flexible conduit (50) comprising an outer casing (40) in tubular form provided with a front end (44) and a rear end (45); an external sealing assembly (70) cooperating with the rear end (45) of the outer casing (40) and with the flexible conduit (50); a closing flange (30) attached to the front end (44) of the outer casing (40) and associated with a connecting flange (20); and an internal sealing assembly (80) cooperating with the flexible conduit (50). According to the invention, the closing flange (30) extends to a position substantially in front of the region contained below an internal tensile shield (54) of the flexible conduit connector for flexible conduit (50).

## Description

The present invention refers to a connector for flexible conduit used in fluid transportation in offshore extraction systems for oil and gas. A connector, as in English end-fitting for a flexible conduit is responsible for supporting, accommodating and securing all layers of the end of a flexible conduit, maintaining the internal and external tightness of said flexible conduit, and connecting said flexible conduit to an adjacent element, such as another segment of flexible conduit, a manifold station or a platform or ship for oil and gas extraction.

In the area of offshore oil extraction collecting oil and gas extracted from wells in the bottom of the sea is made through horizontal conduits, in English flowlines, generally static, and conducts mainly vertical, in English risers, responsible for connection between horizontal conduits and the platform or ship for extracting oil. The vertical conduits can be of rigid or flexible types.

Notably, the flexible conduits (flexible risers) used for this purpose are exposed to different weather conditions arising from the environment in which they are inserted. The strong currents and the seawater itself require that flexible conduits be prepared for all the adversities imposed on them. For this purpose, there are already foreseen in the state of the art flexible conduits made of several layers of materials and in different ways.

Among the layers present in a flexible conduit are the internal tensile shield and the external tensile shield, manufactured from steel wires arranged helically and responsible for the tensile strength of the flexible conduit. Additionally, there may be more tensile shield layers, increasing the tensile strength of the flexible conduit. However, the layers of the tensile shield are still responsible for much of the fatigue failure of the flexible conduits.

Due to the complexity of manufacturing the flexible conduits and the size of the coiled wire of the tensile shield used in this process there are used segments of flexible conduits of approximately 1,000 meters long over an oil collecting line. Thus, to achieve the required length of the collecting line according to its application, there are installed connectors at the ends of each segment of flexible conduit in order to effect the connection between the different segments of flexible conduits. Furthermore, the connectors are used to connect the end of a flexible conduit to a manifold station or a platform or ship for oil extraction.

The connectors are responsible for supporting, accommodating and securing all the layers of the flexible conduit, maintaining its internal and external tightness. One connector comprises an elongated portion over which the internal tensile shield and the external tensile shield are anchored. An internal seal assembly, responsible for internal tightness of the flexible conduit, is in cooperation with the innermost end of the elongated portion and with a polymeric layer of internal sealing of the flexible conduit.

During the assembly process of the connector on the flexible conduit, it is necessary to effect folding in the internal tensile shield and the external tensile shield such that an operator has access to the activation region of the internal seal assembly. When carrying out this folding the internal tensile shield and the external tensile shield, the steel wires composing them deform plastically such that they acquire increased residual stresses, which is characterized as a major factor for fatigue failure of the tensile shields of flexible conduit. Indeed, dismounting of connectors that were in operation or that underwent qualification tests (fatigue test of the type stress-stress and stress-bending) evidenced that the critical region for failure of the flexible conduit failure is just correspondent to the region in which it was conducted folding the internal tensile shield and external tensile shield.

In order to eliminate the need folding the internal tensile shield and the external tensile shield of the flexible conduit, and thus increase its resistance to fatigue, document US20120211975 proposes a connector for flexible conduit having an internal sealing assembly displaced from the position below the region on which the tensile shields are anchored to a position near a closing flange of the connector. Thus, there is no need to fold the tensile shields of the flexible conduit tensile to access the mounting region of the internal sealing assembly. In other words, the assembly of the internal sealing assembly has become independent of the anchoring of the internal tensile shield and the external tensile shield.

A conventional connector for flexible conduit of the state of the art also exhibits drawbacks. Despite the connector with internal sealing assembly displaces provided in US20120211975 does not require the folding operation of tensile shields for mounting it on the flexible conduit, the closing flange of said connector is provided with an elongated portion that advances beneath the tensile shields.

During assembly of the connector into the flexible conduit, the elongated portion of the closing flange is introduced beneath the tensile shields by manual intervention of operators. For the closing flange to be mounted on the flexible conduit with a proper clearance fit, it is necessary to prepare the surface of the layer of said flexible conduit over which the closing flange is mounted including a surface area covering the whole length of the elongated portion of said closing flange. Moreover, the introduction of the elongated portion of the closing flange beneath the tensile shields of the flexible conduit induces an excessive opening in said tensile shields. In order to continue mounting the connector, it is necessary to perform a contention of that excessive opening. For that purpose, as disclosed in US20120211975, the tips of the tensile shields need to be fitted in a support bracket attached to the closing flange. The assembly tasks described above tale considerable time and a considerable amount of financial resources to be executed.

In order to eliminate these drawbacks, the present invention proposes a connector for a flexible conduit, comprising an outer casing in tubular form provided with a front end and a rear end; an external sealing assembly cooperating with the rear end of the outer casing and with a flexible conduit; a closing flange attached to the front end of the outer casing and associated with an internal connecting flange; and a sealing assembly cooperating with the flexible conduit. According to the invention, the closing flange extends to a position substantially above the region enclosed below an internal tensile shield of the flexible conduit. The term "below" should be interpreted as "nearest to the center." In other words, the losing flange according to the invention is not provided with an elongated portion that advances beneath the tensile shields, such as the elongated portion present in the closing flange of the prior art connector.

Thus, advantageously, according to the proposed solution, there is a closing flange of simplified manufacturing. Still advantageously, the connector assembly into the flexible conduit is also simplified. More particularly, compared to the prior art, the step of introducing the elongated portion of the closing flange below the tensile shields is eliminated. Thus, it is reduced the manual intervention of operators and, therefore, the chances of occurring failures in mounting the connectors into the flexible conduits. In addition, with the absence of the elongated portion it is reduced the area of preparation of the layer of the flexible conduit over which the closing flange is mounted. Further, with the lack of the elongated portion advancing below the tensile shields, it is eliminated the excessive opening of said tensile shields. Accordingly, in order to proceed with connector assembly continued, there is no need to perform any containment of the opening of tensile shields. All the advantages described above contribute to a reduction in time and resources spent in assembling the connector into the flexible conduit.

The invention will be better understood from the following detailed description, which shall be understood better with the aid of the figures, as follows:
Figure 1 shows a longitudinal sectional view of a conventional connector (10') belonging to the prior art, mounted into a flexible conduit (50).
Figure 2 shows a longitudinal sectional view of a connector (10) according to one embodiment of the invention, mounted into a flexible conduit (50).
Figure 3 shows a longitudinal sectional view of a connector (10) according to an alternative embodiment of the invention, mounted on a flexible conduit (50).

The following detailed description is made based on a flexible conduit (50) having six layers, as provided in the state of the art. However, it will be apparent that the invention herein proposed is configures not only to a flexible conductor (50) having six layers, being applied to other flexible conduits having different numbers of layers, complying with the scope of the claims.

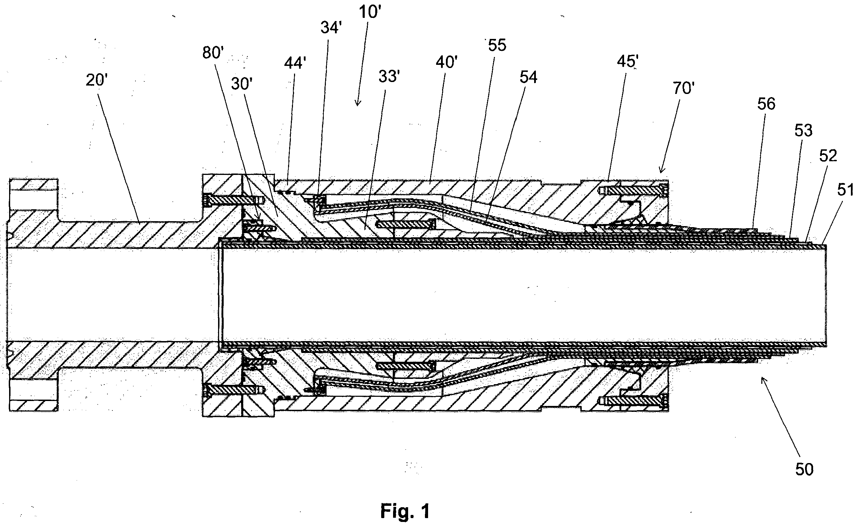

A flexible conduit (50) having six superposed layers, as can be seen in Figures 1, 2 and 3 is comprised of an internal housing (51), a polymer layer for internal sealing (52), a pressure shield (53), an internal tensile shield (54), an external tensile shield (55) and a polymeric layer for externa sealing (56).

A connector (10') for flexible conduit (50) as described in US20120211975 and as can be seen in Figure 1, comprises an outer casing (40') of tubular shape, provided with a front end (44') and a rear end (45'); an external sealing assembly (70') cooperating with the rear end (45') of the outer casing (40') and with a flexible conduit (50) so as to perform a sealing with respect to the external environment to said flexible conduit (50); a closing flange (30') attached to the front end (44') of the outer casing (40') and associated with a connection flange (20'); and an internal sealing assembly (80') cooperating with the flexible conduit (50) so as to perform a sealing with respect to the internal environment to said flexible conduit (50).

Further, the closing flange (30') is provided with an elongated portion (33') advancing beneath the tensile shields (54, 55). During assembly of the connector (10') into the flexible conduit (50), the elongated portion (33') of the closing flange (30') is inserted below the tensile shields (54, 55) from a manual intervention of operators. For the closing flange (30') to be mounted into the flexible conduit (50) with an appropriate clearance fit, it is necessary to prepare the surface of the layer of said flexible conduit (50) over which the closing flange (30') is mounted, including a surface area covering the whole length of the elongated portion (33') of said closing flange (30'). More particularly, in the embodiment depicted in Figure 1, the surface area to be prepared corresponds to the area of the pressure shield (53) over which the elongated portion (33') is inserted.

Furthermore, the introduction of the elongated portion (33') of the closing flange (30') beneath the tensile shields (54, 55) of the flexible conduit (50) induces an excessive opening in said tensile shields (54, 55). In order to proceed with connector assembly (10'), but particularly for attaching the front end (44') of the outer casing (40') into the closing flange (30'), it is necessary to perform a contention in that excessive opening. Therefore, as disclosed in US20120211975, the ends of the tensile shields (54, 55) need to be fitted into a support bracket (34') attached to the closing flange (30'). The assembly tasks described above takes a considerable time and a considerable amount of financial resources to be executed.

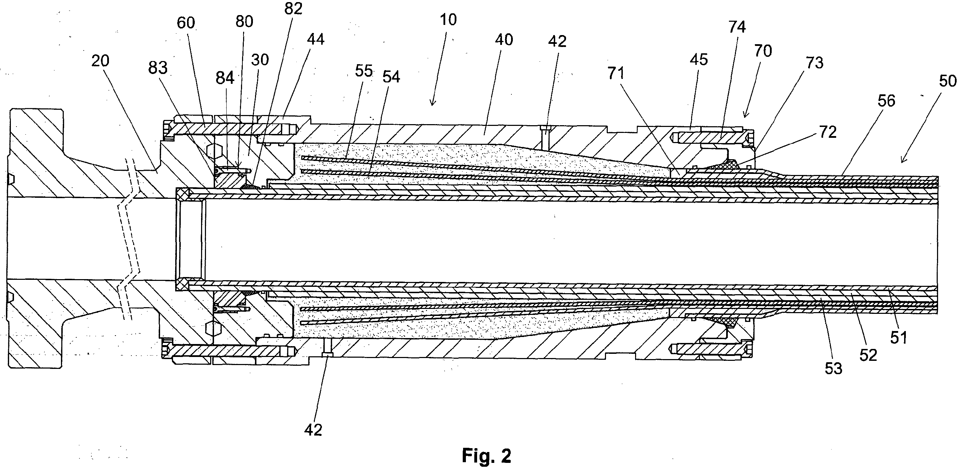

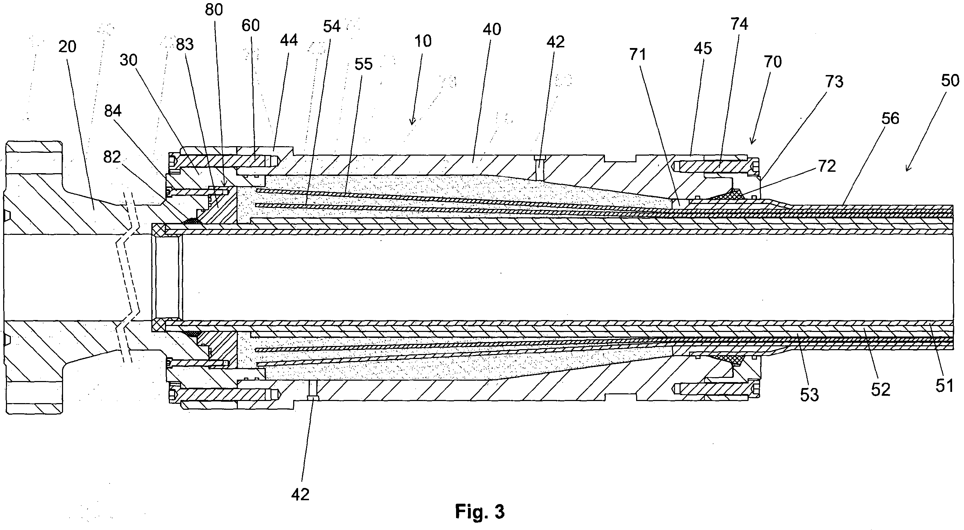

With the aim to eliminate these drawbacks, the present invention proposes a connector (10) for flexible conduit (50), as can be seen in Figures 2 and 3, comprising an outer casing (40) in tubular shape, provided with a front end (44) and a rear end (45); one external sealing assembly (70) cooperating with the rear end (45) of the outer casing (40) and with the flexible conduit (50); one closing flange (30) attached to the front end (44) of the outer casing (40) and associated with a connecting flange (20); and an internal sealing assembly (80) cooperating with the flexible conduit (50). According to the invention, the closing flange (30) extends to a position substantially anterior to the region contained below an inner tensile shield (54) of the flexible conduit (50). The term "below" should be interpreted as "nearest to the center." In other words, the closing flange (30) according to the invention is not provided with an elongated portion that advances beneath the tensile shields (54, 55), such as the elongated portion (33') present in the closing flange (30') of the connector (10') of the prior art.

Thus, advantageously, according to the proposed solution, there is a closing flange (30) of simplified manufacturing. Still advantageously, the connector assembly (10) in the flexible conduit (50) is also simplified. More particularly, compared to the prior art, the step of introducing the elongated portion (33') of the closing flange (30') below the tensile shields (54, 55) is eliminated. Thus, it is reduced the manual intervention by the operator and, therefore, the chances of occurring failures in the assembly of connectors (10) to the flexible conduits (50). Furthermore, with the absence of the elongated portion (33') it is reduced the area of preparation of the layer of the flexible conduit (50) over which the closing flange (30) is mounted. Still, with the absence of the elongated portion (33') that advances beneath the tensile shields (54, 55), it is eliminated the excessive opening of said tensile shields (54, 55). Accordingly, in order to proceed with assembly of the connector (10), there is no need to perform any containment of the opening of the tensile shields (54, 55). All the advantages described above contribute to a reduction in the time and resources spent with assembly of connector (10) on the flexible conduit (50).

The outer sealing assembly (70) is responsible for practicing a sealing with respect to the environment external to the flexible conduit (50). More particularly, the outer sealing assembly (70) actuates on the polymeric layer of outer seal (56) of said flexible conduit (50). According to the illustrated embodiment, as can be seen in Figures 2 and 3, the outer sealing assembly (70) comprises an expansion ring (71) positioned beneath the polymer layer of outer seal (56) and a sealing ring (72) in the form of wedge actuating on the said polymer layer of outer seal (56) and against a recess present in the rear end (45) of the outer casing (40), said sealing ring (72) being covered by an actuation flange (73) attached to the rear end (45) of the outer casing (40) by screws (74). Furthermore, the outer sealing assembly (70) may comprise one or more auxiliary sealing rings of the type of O-ring.

The conduit of internal sealing conduit (80) is responsible for practicing a sealing with respect to the internal environment to the flexible conduit (50). More particularly, the internal sealing assembly (80) actuates on the polymer layer of internal sealing (52) of the flexible conduit (50).

The closing flange (30) is responsible for closing the front end (44) of the outer casing (40). The connecting flange (20) is responsible for providing the connection of connector (10) to an adjacent element, in which the flexible conduit (50) is to be connected.

According to an embodiment of the invention, as can be seen in Figure 2, the closing flange (30) and the connecting flange (20) are independent elements, the connecting flange (20) being attached to the closing flange (30). The attachment of the closing flange (30) to the front end (44) of the outer casing (40) and the attachment of the connecting flange (20) to the closing flange (30) is carried by a set of screws (60) common to the two elements (20, 30). Alternatively, according to an embodiment not shown, the attachment of the closing flange (30) to the front end (44) of the outer casing (40) is carried by a first set of screws and the attachment of the connecting flange (20) to the closing flange (30) is performed by a second set of screws, independent of the first set of screws.

According to an embodiment of the invention, the closing flange (30) receives the internal sealing assembly (80). More particularly, according to the illustrated embodiment, as can be seen in Figure 2, the internal sealing assembly (80) comprises a sealing ring (82) in the form of a wedge acting on the polymeric layer inner of internal sealing (52) and against a recess present in the closing flange (30), said sealing ring (82) being covered by an activation flange (83) attached to the closing flange (30) by screws (84). According to an alternative embodiment of the invention, the connecting flange (20) receives the internal sealing assembly (80). More particularly, according to an alternative embodiment not depicted, the internal sealing assembly (80) comprises a sealing ring (82) in the form of a wedge acting on the polymeric layer of internal sealing (52) and against a recess present in the connecting flange (20), said sealing ring (82) being covered by an activation flange (83) attached to the connecting flange (20) by screws (84). Additionally, the internal sealing assembly (80) may comprise one or more auxiliary sealing rings of the type of O-ring.

According to an alternative embodiment, as can be seen in Figure 3, the closing flange (30) and the connecting flange (20) are made of a single body. The attachment of the closing flange (30) at the front end (44) of the outer casing (40) is carried out by a set of screws (60). The closing flange (30) receives the internal sealing assembly (80). More particularly, the internal sealing assembly (80) comprises a sealing ring (82) in the form of a wedge acting on the polymeric layer of internal sealing (52) and against a recess present in the closing flange (30), said sealing ring (82) being covered by an activation flange (83) attached to the closing flange (30) by screws (84). Additionally, the internal sealing assembly (80) may comprise one or more auxiliary sealing rings of the type of O-ring.

As can be seen in Figures 2 and 3, the internal tensile shield (54) and the external tensile shield (55) are anchored to connector (10) by means of an epoxy resin. The outer casing (40) is provided with at least two openings (42). During the assembly of connector (10) to the flexible conduit (50), the epoxy resin is introduced through one of the openings (42) and the air is released through the other opening (42). In the embodiments depicted, as can be seen in Figures 2 and 3, the tip of the tensile shields (54, 55) shows a straight profile. However, the tip of the tensile shields (54, 55) may present other anchoring profiles, such as a corrugated profile or a profile in the shape of "C", as already foreseen in the prior art.

The preferred or alternative embodiments described herein do not have the power to limit the invention to the structural shapes described and may have constructive variations that are equivalent without, however, departing from the protection scope of the invention.

## Claims

1. "CONNECTOR FOR FLEXIBLE CONDUIT", comprising an outer casing (40) in tubular shape, provided with a front end (44) and a rear end (45); one external sealing assembly (70) cooperating with the rear end (45) of the outer casing (40) and with a flexible conduit (50); a closing flange (30) attached to the front end (44) of the outer casing (40) and associated with a connection flange (20); and an internal sealing assembly (80) cooperating with the flexible conduit (50), **characterized in that** the closing flange (30) extends to a position substantially in front of the region contained below an inner tensile shield (54) of the flexible conduit (50).

2. "CONNECTOR FOR FLEXIBLE CONDUIT", according to claim 1, **characterized in that** the closing flange (30) and the connecting flange (20) are independent elements, and the connecting flange (20) attached to the closing flange (30).

3. "CONNECTOR FOR FLEXIBLE CONDUIT", according to claim 2, **characterized in that** the closing fixing flange (30) at the front end (44) of the outer casing (40) and the attachment of the connecting flange (20) to the closing flange (30) are carried out by a set of screws (60) common to the two elements (20, 30).

4. "CONNECTOR FOR FLEXIBLE CONDUIT", according to claim 2, **characterized in that** the attachment of closing flange (30) to the front end (44) of the outer casing (40) is carried out by a first set of screws and the attachment to the connecting flange (20) on the closing flange (30) is carried out by a second set of screws, independent of the first set of screws.

5. "CONNECTOR FOR FLEXIBLE CONDUIT", according to claim 2, 3 or 4, **characterized in that** the closing flange (30) receives the internal sealing assembly (80).

6. "CONNECTOR FOR FLEXIBLE CONDUIT", according to claim 5, **characterized in that** the internal sealing assembly (80) comprises a sealing ring (82) in the form of a wedge acting on a polymeric layer of internal sealing (52) of the flexible conduit (50) and against a recess present in the closing flange (30), said sealing ring (82) being covered by an actuation flange (83) attached to the closing flange (30) by screws (84).

7. "CONNECTOR FOR FLEXIBLE CONDUIT", according to claim 2, 3 or 4, **characterized in that** the connecting flange (20) receives the internal sealing assembly (80).

8. "CONNECTOR FOR FLEXIBLE CONDUIT", according to claim 7, **characterized in that** the internal sealing assembly (80) comprises a sealing ring (82) in the form of a wedge acting on a polymeric layer of internal sealing (52) of the flexible conduit (50) and against a recess present in the connecting flange (20), said sealing ring (82) being covered by an actuation flange (83) attached to the connecting flange (20) by screws (84).

9. "CONNECTOR FOR FLEXIBLE CONDUIT", according to claim 1, **characterized in that** the closing flange (30) and the connecting flange (20) are made of a single body.

10. "CONNECTOR FOR FLEXIBLE CONDUIT", according to claim 9, **characterized in that** the attachment of the closing flange (30) at the front end (44) of the outer casing (40) is carried by a set of screws (60).

11. "CONNECTOR FOR FLEXIBLE CONDUIT", according to claim 9 or 10, **characterized in that** the closing flange (30) receives the internal sealing assembly (80).

12. "CONNECTOR FOR FLEXIBLE CONDUIT", according to claim 11, **characterized in that** the internal sealing assembly (80) comprises a sealing ring (82) in the form of a wedge acting on a polymeric layer of internal sealing (52) of the flexible conduit (50) and against a recess in the closing flange (30), said sealing ring (82) being covered by an actuation flange (83) attached to the closing flange (30) by screws (84).
